Europäisches Patentamt

European Patent Office

Office européen des brevets

(11) Publication number: **0 467 523 A2**

# EUROPEAN PATENT APPLICATION

(21) Application number: **91305188.4**

(22) Date of filing: **10.06.91**

(51) Int. Cl.⁵: **B62D 37/00**

(30) Priority: **16.07.90 JP 188499/90**
**05.03.91 JP 38608/91**

(43) Date of publication of application:
**22.01.92 Bulletin 92/04**

(84) Designated Contracting States:
**AT BE CH DE DK ES FR GB GR IT LI LU NL SE**

(71) Applicant: **Yamazaki, Masanubo**
**Isutowaau Goshohigashi 307,**
**Shinkarasuma-kashira-cho**
**Sinkarasuma-maruta-machi, Kamigyo-ku,**
**Kyoto-shi(JP)**

(72) Inventor: **Yamazaki, Masanubo**
**Isutowaau Goshohigashi 307,**
**Shinkarasuma-kashira-cho**
**Sinkarasuma-maruta-machi, Kamigyo-ku,**
**Kyoto-shi(JP)**

(74) Representative: **Barker, Rosemary Anne et al**
**c/o Mewburn Ellis, 2 Cursitor Street**
**London EC4A 1BO(GB)**

(54) **Automobile.**

(57) To enhance stability in both vertical and lateral directions while the automobile is travelling, either respective air grooves (7) are provided along right and left sides of the automobile body, or air passageways (2) are formed in the right and left sides of the automobile body with openings (21, 22) thereto both at the front and rear of the automobile body, and optionally in the middle too (at 20).

Fig. 2

Fig. 8

The present invention relates to all kinds of automobiles including passenger cars, sports cars, vans, trucks and buses.

These days a lot of consideration has been given to the design of automobiles so as to enable them to travel stably at high speed.

Taking air flow into consideration, for example, the contour of an automobile body is designed so as to reduce and keep air resistance to a minimum, and the front part of the body is inclined downward in the forward direction so as to obtain a downward force, to press the automobile down onto a road surface.

Lowering air resistance during high speed travel may lower energy loss and improve economy. An increase in the contact force between tyres and road surface may reduce the possibility of slipping or veering of automobiles.

In conventional automobiles, although air flows basically from the front to the rear while it is travelling, it flows randomly across the body surface, i.e. over the top and side surfaces. Therefore, while a downward force may be exerted on the body, it may not be sufficient to maintain lateral stability to the right and the left, and this could result in insufficient travelling balance at high speed.

Furthermore, as the speed of travel of the vehicle increases, air flowing over the body surface is likely to deviate or separate from the layer of air flowing in direct contact with the body, and the air flow in any event tends to be complicated and turbulent. The result of this, in case an automobile having a cooling device, such as a radiator or an oil cooler, is that cooling air introduced to the device from an air inlet of the automobile is thin (i.e. of low density), and this can cause engine trouble due to overheating. To solve this problem, a projecting air inlet may be provided on the body surface to take in additionally, air which has deviated from the surface, but this increases air resistance and so is not favourable.

Taking the foregoing circumstances into account, it is a primary object of the invention to provide an automobile which will travel with excellent straightforward stability in the vertical and lateral directions.

It is another object of the invention to provide an automobile with the above advantage in which sufficient ambient air will enter an air inlet, e.g. for cooling purposes, with no increase in air resistance.

To achieve the primary object, an automobile according to the present invention has respective air grooves or air passageways along right and left sides of its body.

In this specification, the words right, left, front and rear should be understood as being in the direction of travel.

As the automobile travels, air enters the air grooves or passageways at the right and left sides and is entrained to flow along the course or track of said grooves or passageways. Thus, while air flows randomly across the surface of a conventional automobile, air flowing along the right and left sides of the automobile of the present invention is entrained in a specific direction and specific path roughly parallel to the road surface.

Consequently, while travelling, the automobile of the invention is supported from both the right and left sides by the air flow in a specific direction which is generated on the right and left sides of the automobile, so that excellent stability in the vertical and lateral directions is obtained.

In embodiments of the invention where air grooves are provided, these may diverge from the front centre of the automobile body toward the rear end thereof, one extending along the right side of the body and the other along the left side. Therefore, air is guided into the air grooves on the right and left sides of such automobile from the front centre through the diverging tracks of the air grooves. With this arrangement, air flows more smoothly and efficiently into the right and left side air grooves, and the air resistance when air gets into the air grooves may be smaller.

The air grooves on the right and left sides of the body may advantageously be inclined upwards toward the rear end of the body such that the air flow in the grooves causes increased down force on the automobile. In any event, the down force on the whole body of the automobile is balanced on the right side and the left side of the body as compared with the prior art, so that the automobile of the invention will travel particularly stably.

Forming the air grooves on the right and left sides of the automobile body so as to extend gradually further apart from each other toward the rear end of the body produces a further advantage in that air coming from the front collides against the bottoms of the air grooves, so that a compressive force acts on the incoming air. In other words, compressed (thick or dense) air flows in the air grooves of the automobile body so the body is supported from both sides by air flow of high density. Thus an embodiment of automobile with gradually parting air grooves may have even better stability in the vertical and lateral directions than any other.

Air inlets for taking cooling air into the automobile are advantageously provided in the rear part of the air grooves, so that almost all the air flowing in the air grooves is then taken into the air inlets. In particular in embodiments having gradually parting air grooves, compressed thick air is taken into the automobile from the air inlets. Therefore, cooling air for a radiator or an oil cooler installed in the rear part of the automobile should be sufficient in volume to avoid any engine trouble due to overheating.

Since such air inlets are formed without projecting from the general body contour, the air resistance is not much increased so these air inlets should not cause any problem for high speed travel.

In embodiments of the invention where air passageways are formed the right and left sides of the automobile (as opposed to air grooves which are open to the exterior for the majority of their extent) openings to these air passageways are generally provided at the front and rear parts of the automobile. The front openings may be at the front end of the automobile body, and as the air passageways extend backward from the front they may also extend further apart from each other to the right and left sides, at least for a certain length.

Thus, when these automobile embodiments travel, air coming from the front enters the air passageways through the opening or openings at the front of the body, and flows along the air passageways to be discharged through further openings towards the rear of the automobile.

Although air flows randomly across the surface of the body of automobiles in accordance with the present invention, just as in prior art, air also flows, in the aforesaid embodiments, in the air passageways which are formed within the left and right sides of the automobile body, just below the surface, in a specific direction roughly parallel to a road surface. Therefore, the automobile, while travelling, is supported from both sides by this air flow. Compared to previously mentioned embodiments of the invention which have air grooves open to the exterior such that air flow along the grooves may deviate to the exterior, air cannot deviate from its path of flow in the closed air passageways, so any risk of lowering of the density of air flow is minimised and a greater or more reliable supporting force is provided to the automobile body.

Thus, embodiments of the invention having air passageways may possess greater stability in the vertical and lateral directions than embodiments having open air grooves.

Additional opening ports communicating to the air passageways may be provided in the middle of each of the right and left sides of the automobile body. When these are provided air enters the respective passageways along the right and left sides from both the frontal inlets and the additional central openings so that a larger volume of air flows in the passageways. Hence, the stability of the automobile in the vertical and lateral directions is further enhanced.

As with the air grooves, the air passageways may be inclined upward toward the rear end of the automobile to bring about enhanced down force on the automobile, which of course is balanced on right and left sides as compared with an automobile of the prior art.

Also as with embodiments having air grooves, embodiments having air passageways may have air inlets for take off of cooling air provided in the rear parts of the air passageways. Almost all the air guided through the air passageways is then taken into these air inlets, and especially in automobiles having additional midway opening ports, air of high density is taken in, thereby supplying enough cooling air to a radiator, or an oil cooler to avoid engine trouble due to overheating.

Again, since such air inlets do not project from the body, the air resistance is not much increased so does not impair high speed travel.

Baffles or straightening plates may be provided in the air passageways to minimise pressure loss of the air flow in the air passageways and thereby enhance the effects described above.

Other baffles or straightening plates inclined upward toward the rear end of the automobile may be provided near the rear openings of the air passageways. These plates serve to deflect the air being discharged from the rear openings so as to cause an enhanced down force on the automobile and further improve the stability during high speed travel.

Other features and benefits of the present invention will be better understood and appreciated from the following detailed description referring to the accompanying drawings, in which:

Fig. 1 is a perspective view showing the contour of a first embodiment of an automobile having air grooves in accordance with the present invention;

Fig. 2 is a side view thereof;

Fig. 3 is a front view thereof;

Fig. 4 is a schematic sectional view showing the contour of the middle part of the automobile of Figs. 1 to 3;

Fig. 5 is a perspective view of a second embodiment having air grooves;

Fig. 6 is a top plan view showing the contour of a third embodiment of automobile in accordance with the invention which in this case has air passageways;

Fig. 7 is a side view of the automobile of Fig. 6;

Fig. 8 is a side view of another embodiment of an automobile having air passageways; and

Fig. 9 is a schematic plan diagram showing the relationship between the positions of the air passageways and the tyres of the automobile of Fig. 8.

Referring now to the drawings, some of the embodiments of the invention are now described in detail.

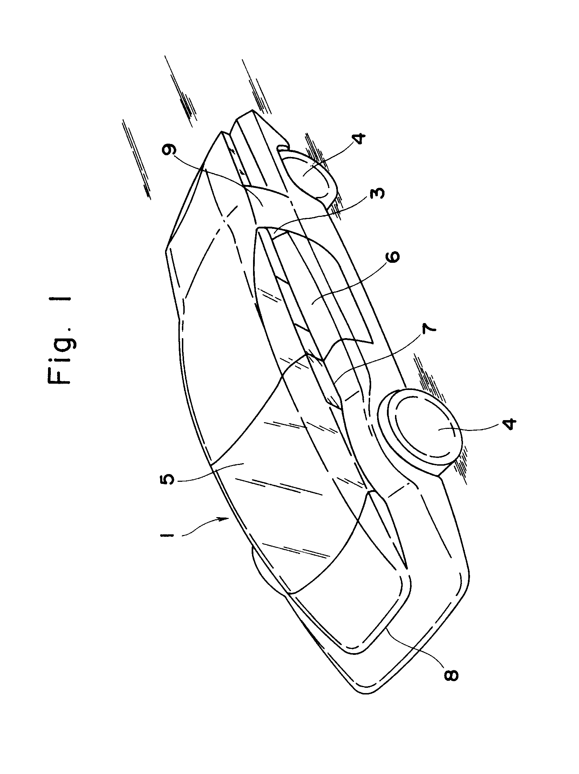

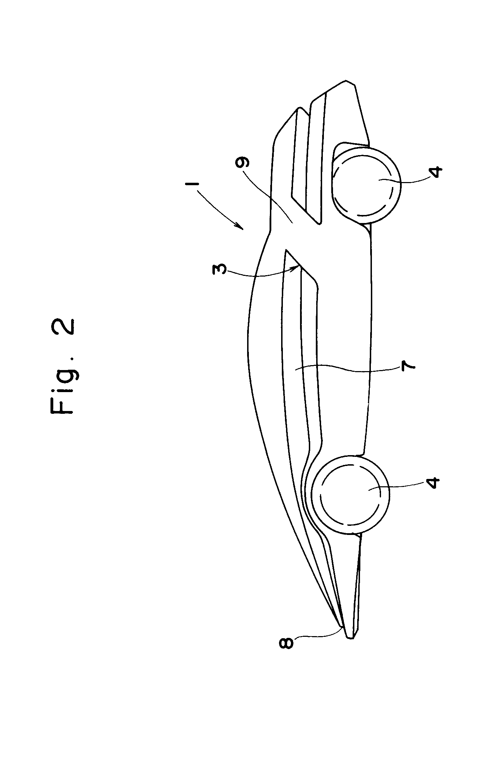

In these embodiments, the invention is applied to a sports car, where a main body 1 is provided with fundamental constituent components of an automobile including tyres 4, a windshield 5, and doors 6 and is formed in a streamlined manner with its top surface inclined upward from the front towards the rear, as shown in Figs. 1 and 2.

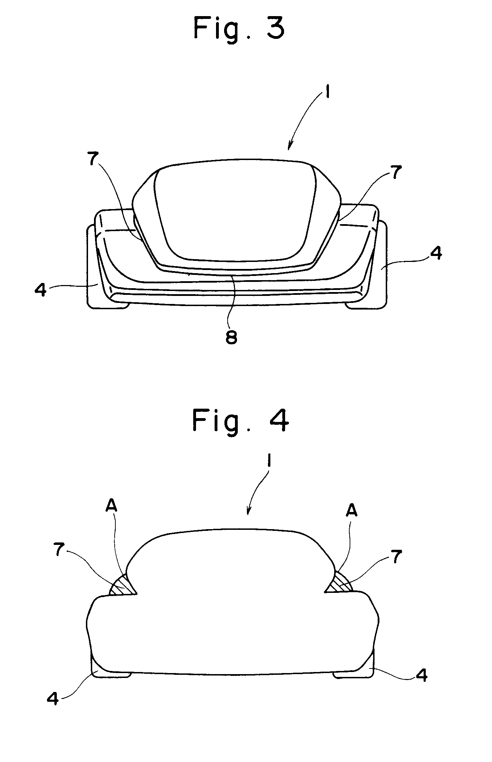

The body 1, as shown in Figs. 1 and 3, is shaped so as to have air grooves 7 which diverge from the centre 8 of the front end and extend along the right and left sides. The sectional shape of the air grooves 7 in the illustrated embodiments approximates to a V-shape with the groove bottom toward the inside of the body 1 as shown in Fig. 4. However, the sectional shape of the air grooves 7 is not limited to a V-shape and other groove shapes such as a U-shape may be employed in other embodiments.

The air grooves 7 are inclined upward from the front toward the rear part of the automobile body as shown in the side view (Fig. 2), and in the plan view (Fig. 3) and the right and left side air grooves 7 gradually extend further apart from each other toward the rear end of the body.

In the illustrated embodiments the air grooves 7 extend to the rear end of the main body 1. In other embodiments they may not extend the full length and may terminate at positions between the front end and the rear end of the main body 1.

The embodiment of the sports car has, at each side, a bodywork bridge section 9 behind the door 6 which links the upper part of the body above the groove 7 to the lower part of the body below the groove 7. In other words the bridge sections 9 connect the upper and lower edges of the respective air grooves 7.

The opening defined by surrounding surfaces of the bridge section 9 and the air groove 7 forms an air inlet 3. Air entering the air inlet 3 is directed into a radiator, an oil cooler, a brake or any other component part of the automobile which needs to be cooled.

The bridge sections 9 also function to maintain the structural strength of the automobile body.

When a car constructed in this manner starts travelling, air colliding with the front end flows into the right and left side air grooves 7 from the front centre 8 and follows the diverging tracks of the grooves in a specific direction.

The air flowing along the air grooves becomes high in density by virtue of the compressive force as explained above. Therefore, the body 1 is supported from both the right and left sides by the air flow A shown in Fig. 4 which is generated on the right and left sides of the body and is high in density, and the air flow A creates a downward force on the automobile, as previously mentioned, so that stable travelling is maintained even in lateral wind.

Since almost all the air flow A is guided into the air inlets 3, engine troubles due to overheating are substantially eliminated. Moreover, it should be noted that the air inlets 3 do not really project from the general body contour, as shown in Fig. 1, so the presence of the air inlets 3 should not cause any problem in high speed travelling.

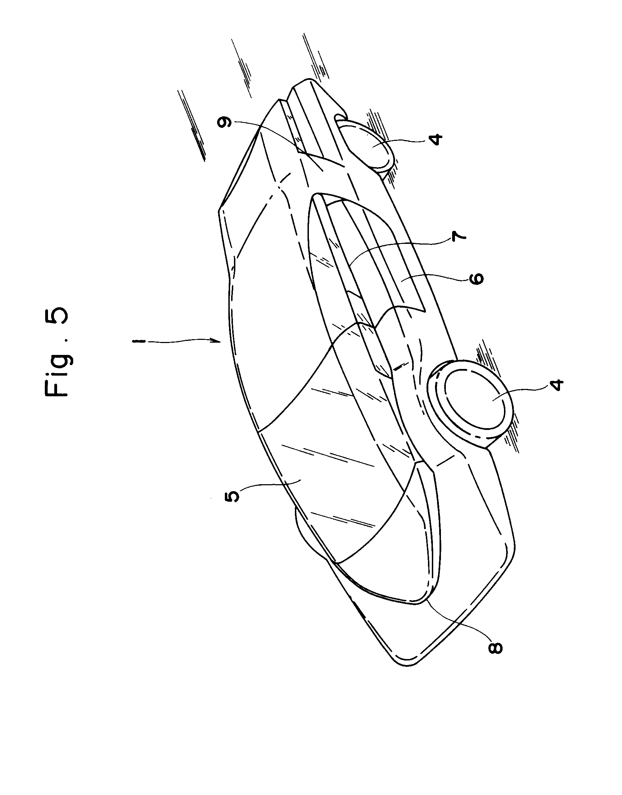

Fig. 5 shows modified embodiment, in which the air grooves 7 on the right and left sides diverge more acutely from the front centre 8 of the body 1, which is formed approximately in a V-shape (in a top plan view). In this case, the air flow in the air grooves 7 is possibly smoother than in the foregoing embodiment of Figs. 1 to 3.

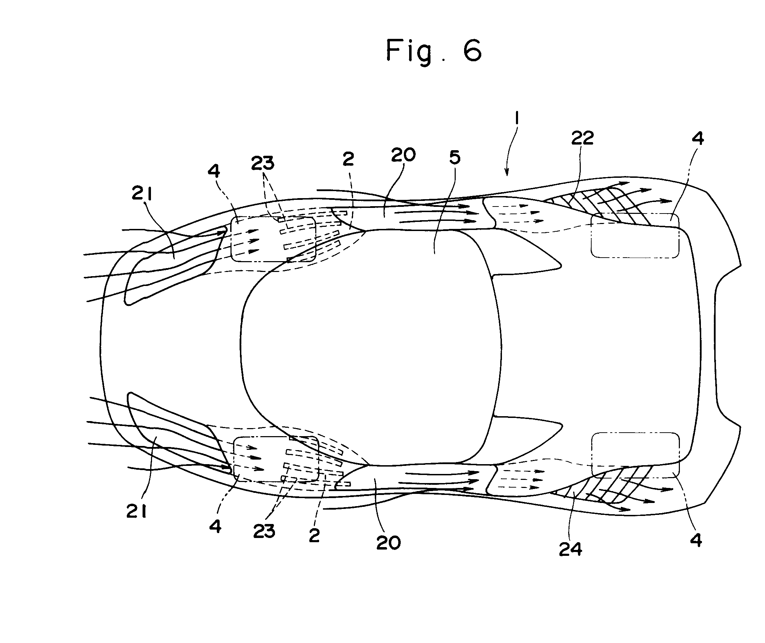

The remaining embodiments, illustrated in Figs. 6 to 9, are applied to a sports car of fundamentally similar construction to the first embodiment of the present invention (hereinafter referred to as Example 1) and the underlying principle is the same. However, instead of the air grooves 7 in Example 1, tunnel-shaped air passageways 2 are provided along both sides of the car body 1.

The air passageways 2 at each side have openings at the front of the main body 1 which constitute air inlets 21, and further openings toward the rear, generally above the rear wheels 4, which constitute air outlets 22.

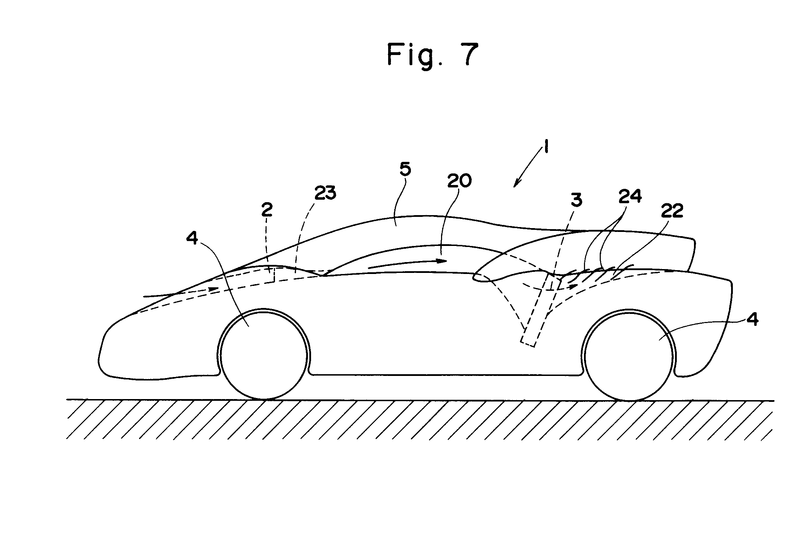

As shown in Figs. 6 and 7, additional openings into the respective air passageways 2, constituting air flow-in ports 20 are provided in the middle of each side surface of the body 1. A plurality of baffles or straightening plates 23 are disposed in the air passageways 2 in front of the air flow-in ports 20. Air flowing across the side surfaces of the car body is able to enter the air passageways via these air flow-in port 20, while the car is travelling. This air flow into the air flow-in ports 20 results in improved air suction into the air inlets 21. The function of the baffles or straightening plates 23 is to prevent disturbance of the air flow along the air passageway 2, so that the pressure los of such air flow is minimised.

The air passageways 2 also include, in the rear part thereof, to the interior of the automobile, air inlets 3 as shown in Fig. 7. As in Example 1, the air entering the air inlets 3 is sent to parts such as the radiator, oil cooler, or brake which need to be cooled.

Once a car constructed in this way starts travelling, part of the air colliding with the front of the main body 1 flows into the air passageways 2 in the body 1 through the air inlets 21 and is discharged to the outside again through the air outlets 22, while some air flowing across the right and left side surfaces of the body 1 additionally enters the air passageways 2 through the air flow-in ports 20 and is also discharged to the outside again through the air outlets 22.

Therefore, a large volume of air passes through the air passageways 2, which is sufficient to ensure stability in the vertical and lateral directions while travelling at high speed while also cooling the radiator, oil cooler or other internal parts of the car.

Preferably the air passageways 2 are constructed so as to incline upwards towards the rear end of the vehicle so as to enhance the downward force on the automobile body 1 and resultant stable travelling. A similar effect may be accomplished by disposing in the air passageways 2, at or near the air outlets 22, baffles or straightening plates 24 which incline upward towards the rear end of the passageways 2, as shown in Fig. 7.

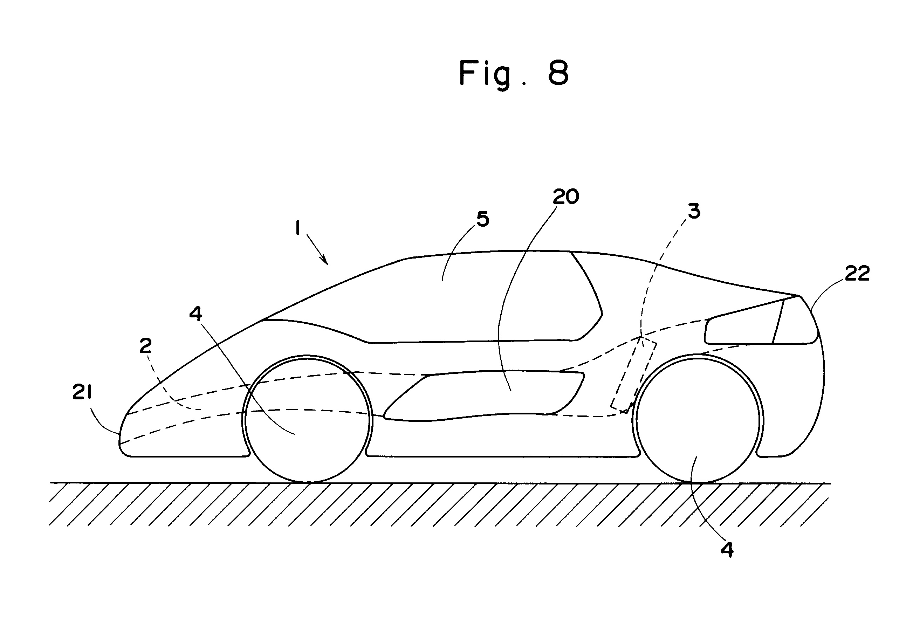

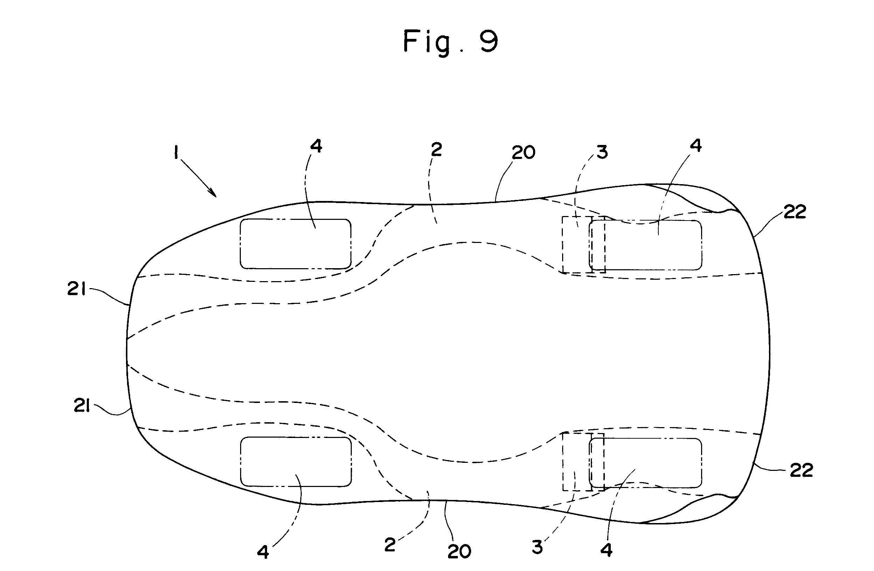

The air passageways 2 may extend above the front wheels 4, as in the embodiment of Figs. 6 and 7, or to the inside of the front wheels 4, as shown in Figs. 8 and 9, and the air inlets 21 may also be located correspondingly higher or lower on the front end of the automobile body 1.

Furthermore, although in these latter embodiments additional air flow-in ports 20 are provided on the right and left sides of the main body 1, this is not essential and other embodiments of the invention having lateral air passageways may have no air flow-in ports 20 and still operate satisfactorily.

The foregoing embodiments relate to application of the invention to a sports car, but naturally this is not limitative, and it may be also applied to any sort of automobile including passenger cars, vans, trucks and buses.

## Claims

1. An automobile having respective air grooves (7) or air passageways (2) along the right and left sides of its body.

2. An automobile having respective air grooves (7) extending along the right and left sides of its body which gradually diverge from the front centre of the body toward the rear end thereof.

3. An automobile according to Claim 1 or 2, wherein the air grooves (7) or the air passageways (2) are inclined upwards toward the rear end of the body.

4. An automobile according to Claim 1, 2 or 3 wherein air inlets (3) for introducing cooling air into the automobile body are disposed in the rear part of each of the air grooves (7) or air passageways (2).

5. An automobile according to any preceding Claim having air grooves (7) which extend gradually further apart from each other toward the rear end of the body.

6. An automobile according to claim 1, 3 or 4 having air passageways (2) in the right and left sides of its body with openings (21, 22) thereto both in the front part and the rear part of the body.

7. An automobile according to Claim 6, wherein the air passageways (2) have their front openings (21) on the front end of the body, and extend gradually further apart from each other to the right and left toward the rear of the body.

8. An automobile according to Claim 6 or 7, wherein additional openings (20) communicating with the air passageways (2) are provided in the middle of the right and left sides of the body.

9. An automobile according to any of Claims 6, 7 or 8, wherein baffles or straightening plates (23, 24) are disposed in the air passageways (2).

10. An automobile according to any of Claims 6 to 9, wherein baffles or straightening plates (24) inclining upward toward the rear are disposed near the rear openings (22) of the air passageways (2).

# Fig. I

EP 0 467 523 A2

# Fig. 2

Fig. 3

Fig. 4

Fig . 5

Fig. 6

# Fig. 7

EP 0 467 523 A2

# Fig. 8

EP 0 467 523 A2

Fig. 9